# EUROPEAN PATENT SPECIFICATION

(11) **EP 2 209 544 B1**
(45) Date of publication and mention of the grant of the patent: **08.08.2018**
(21) Application number: 08839780.7
(22) Date of filing: 15.10.2008
(51) Int. Cl.: B01D 29/44

(54) **FILTER ELEMENTS WITH SHAPED WIRE**
FILTERELEMENTE MIT PROFILSTAB
ÉLÉMENTS FILTRANTS À FIL FAÇONNÉ

(30) Priority: 17.10.2007 BE 200700499
(43) Date of publication of application: 28.07.2010
(73) Proprietor: Unislot NV, 8792 Desselgem (BE)
(72) Inventor: VERSTRAETE, Marc, B-8860 Lendelede (BE)
(74) Representative: Ostyn, Frans
(86) International application number: PCT/IB2008/002747
(87) International publication number: WO 2009/050568

(56) References cited:
- EP-A- 0 316 570
- WO-A-01/61104
- WO-A-01/80969
- WO-A-01/87457
- US-A- 3 667 615
- US-A- 5 047 148

## Description

This invention relates to a filter element provided with a shaped wire, comprising two side flanks which are joined together at a first end via a weld foot and are joined together at a second end via a head part positioned opposite the weld foot, the distance between the aforementioned side flanks becoming greater in the direction of the weld foot. Filtration is a separating method which is used on a large scale in industry in order inter alia to separate solid and liquid substances from one another, to filter gases, etc. In a known form of filtration, a flow of liquid is passed through a filter element.
Filter elements of this type have already long been known and are readily commercially available. These known filter elements are for example used in what are known as reflushing devices, consisting of a box containing a filter - and an outflow opening, wherein liquid can flow through the filter elements during filtration from inside to outside or vice versa, or during reflushing from outside to inside or vice versa.
The known filter elements are made up of longitudinal rods which run in the longitudinal direction and around which a shaped wire is wound. Filter openings are formed between one or more windings. The number of longitudinal rods is dependent on the size of the filter element.
The shaped wire used to date has in cross section a shape corresponding to an isosceles triangle and is connected at its flat side (weld foot) to the longitudinal rods by way of welding. However, during the welding operation, a weld stack forms. The term "weld stack" refers in this patent application to the material which melts as a result of the welding operation and stacks up on the longitudinal rods and/or on the welded shaped wire.
As a result of the presence of this weld stack, a minimum gap opening of 50 microns should be allowed for in the production of filter elements in order to be able to ensure a certain quality and tolerance with respect to the gap opening. After all, the weld stack will start to stack up next to the shaped wire which has just been welded, making it impossible to position the closest shaped wire on the longitudinal rods in such a way that a constant gap opening, in particular less than 50 microns, is obtained over the filter element.

The shaped wires described in WO 01/87457 US 5,047,148 and US3667615 comprise side flanks, the distance between the side flanks becoming smaller in the direction of a foot which is intended to be positioned in a recess formed in the surface of a ring and the surface of a plate respectively. Filter elements produced using the shaped wires described in WO 01/87457, US 5,047,148 and US3667615 do not have, partly as a result of their shape, the above-described problem with regard to weld stacking.

The object of this invention is therefore to produce filter elements provided with a shaped wire which no longer have the above-mentioned drawback as a result of the weld stack and can be produced having a narrower gap opening.

The object of the invention is achieved by providing a filter element according to claim 1.

Since the weld foot is no longer shaped by a flat side, but rather comprises a bulging portion, a space is created for the weld stack. As a result, the weld stack will no longer come to lie, when the shaped wire is welded to a longitudinal rod, outside the width of the shaped wire and it becomes possible to position the shaped wire precisely on the longitudinal rods of a filter element so that the shaped wire according to the invention provides a filter element having a narrower gap opening (less than 50 microns). In addition, the shaped wire according to the invention allows more precise tolerances with respect to the gap opening to be adhered to.
In a preferred embodiment of the shaped wire according to the invention, the bulging portion has a width which is less than the distance between the aforementioned first ends. In particular, the width of the bulging portion is at least 5 % less than the distance between the first ends.

In a particular embodiment of the shaped wire according to the invention, the centre line of the shaped wire is an axis of symmetry of the aforementioned shaped wire.

In a more specific embodiment of the shaped wire according to this invention, the bulging portion has a rounded-off U-shaped cross section. According to another particular embodiment of the shaped wire, the bulging portion has a rectangular cross section.

The shaped wire according to this invention is made of metal.

Filter elements according to the invention have the great advantage that the weld stack almost no longer comes, as a result of the welding operation, outside the region delimited by the first ends of the shaped wire, and in this way presents no obstacle to the closest shaped wire. As a result, the shaped wire can be positioned much more precisely and closer next to the closest shaped wire. This allows the production of filter elements having a much narrower gap opening. In the filter element according to the invention, the filtering openings formed have a gap opening of between 1 and 50 microns. More particularly the gap opening is between 8 and 40 microns and most particularly the gap opening is between 8 and 30 microns. Preferably, filter elements are obtained having a tolerance of +/- 10 microns with respect to the gap opening formed.
In a preferable embodiment of the filter element according to the invention, the aforementioned filter element is a flat filter. In a flat filter, the separate shaped wires are welded next to one another to longitudinal rods, at a certain distance from one another.
In another preferable embodiment of the filter element according to the invention, the aforementioned filter element is a round filter.
In a preferable embodiment of the filter element according to the invention, the aforementioned filter element comprises a shaped wire as described hereinbefore.
The subsequent detailed description of the shaped wire for the filter element according to the present invention illustrates the aforementioned features and advantages of the invention. It will be clear that the sole intention of this description is to illustrate the general principles of this invention by way of a specific example. The subsequent description refers by means of reference numerals to the appended figures, in which:
- *Figure 1* *is a view of a shaped wire according to the prior art;*
- *Figure 2* *is a detailed view of the region A encircled in* *Figure 1**;*
- *Figure 3* *is a perspective view of a shaped wire according* to *the invention provided on a longitudinal rod;*
- *Figure 4* *is a front view of* *Figure 3**;*
- *Figure 5* *is a detailed view of the region B encircled in* *Figure 4**;*
- *Figure 6* *is a view of a part of a round filter element provided with a shaped wire according to the invention;*
- *Figure 7* *is* a *detailed view of the region C encircled in* *Figure 6**;*
- *Figures 8, 9, 10 and 11* *show a number of possible cross sections of a shaped wire according to the invention; and*

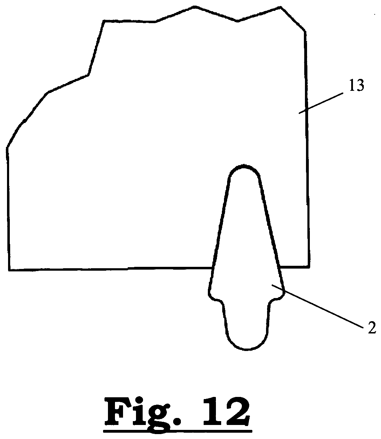

- *Figure 12* *is a view of a welding electrode with a shaped wire.*

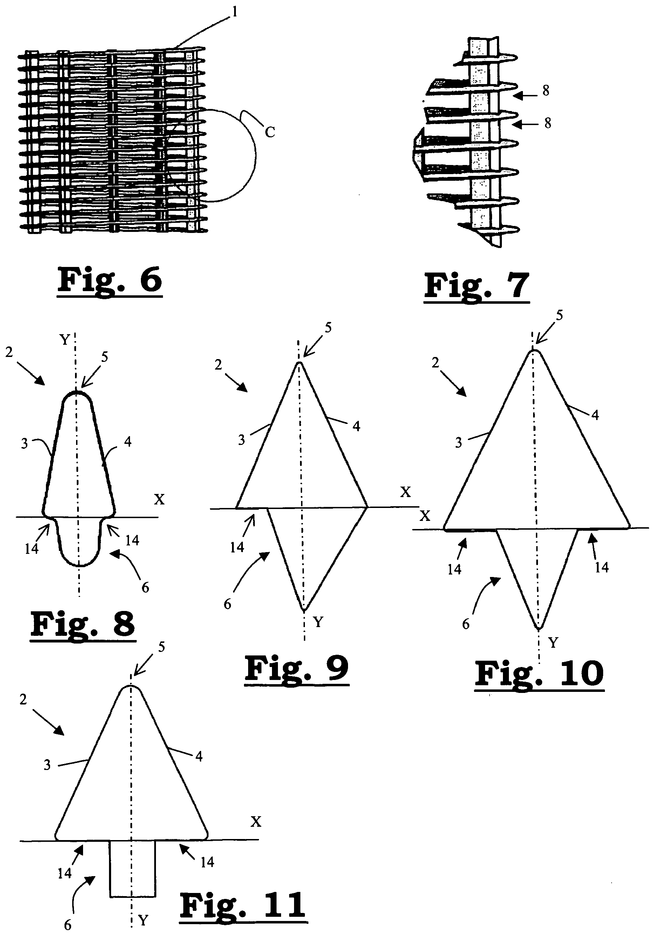

Filter elements (1) are (see Figure 6) made up of longitudinal rods (7) which run in the longitudinal direction and comprise a top part (9) to which a shaped wire (1) is welded. Between one or more shaped wires (2) lying next to one another, filtering openings (8) are formed having a clearly defined gap opening. The number of longitudinal rods (7) is dependent on the size of the filter element (1).

In the production of filter elements (1), the shaped wire (2) is pressed with the aid of a welding device, in particular via a welding electrode (13), against the longitudinal rods and connected thereto. In this case, the welding electrode (13) is shaped or angled in accordance with the profile of the shaped wire which is to be welded.

A shaped wire (2) for a filter element (1) comprises two side flanks (3,4) which are joined together at a first end via a weld foot and are joined together at a second end via a head part (5) positioned opposite the weld foot, the distance between the aforementioned side flanks becoming greater in the direction of the weld foot.

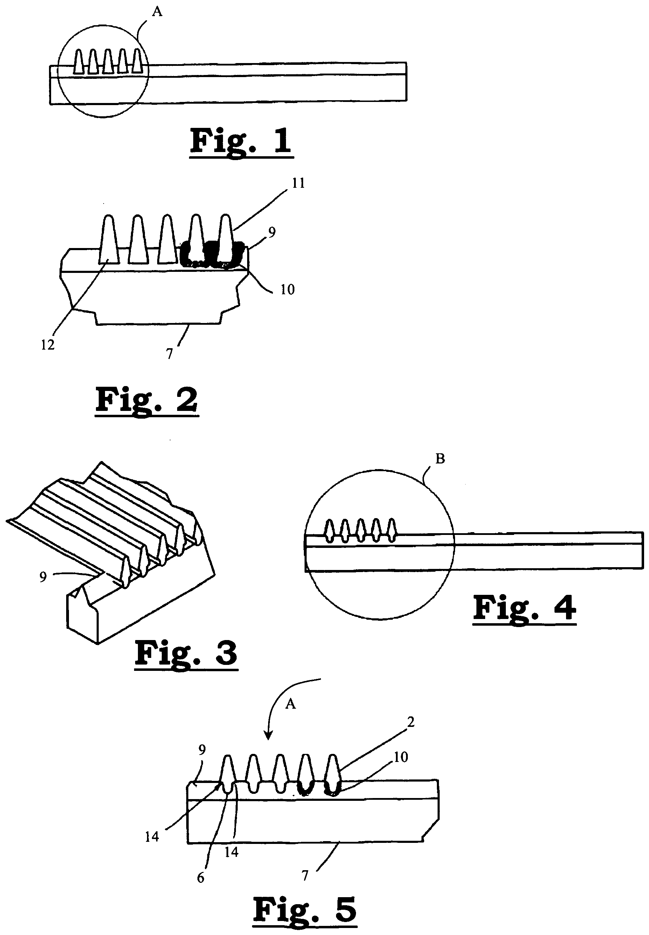

Figures 1 and 2 are views of a shaped wire (11) according to the prior art provided on a longitudinal rod (7); these known shaped wires have a cross section corresponding to an isosceles triangle and are connected at their flat side (12) to the top part (9) of the longitudinal rods (7) via a welding operation. However, during the welding operation, a weld stack (10) is formed as a result of the fusing of the longitudinal rods (7) and the shaped wire. As a result of the presence of this weld stack (10), a minimum gap opening of 50 microns should, as discussed hereinbefore, be allowed for in the production of filter elements (1) in order to be able to ensure a certain quality and tolerance with respect to the gap opening. The term "tolerance" refers to the difference between the largest and smallest gap opening measured in a clearly defined filter element. For example, the effective gap opening of a filter element having a gap opening of 60 microns and a tolerance of +/-30 microns can thus be 30 microns above or below the predefined value of 60 microns. The shaped wire according to the prior art can be used to produce filter elements having a tolerance with respect to the gap opening that is at least 50 % better.

In the shaped wire (2) for the filter element in accordance with the invention, the weld foot comprises at least one bulging portion (6) which bulges below the plane (X) formed by the aforementioned first ends. Furthermore, the bulging portion (6) has a width which is less than the distance between the aforementioned first ends. In this way, and as presented in Figure 5, a space is created for the weld stack (10). As a result, the weld stack (10) will come to lie, when the shaped wire is welded to the top part (9) of a longitudinal rod (7), almost no longer outside the limit demarcated by the former and it becomes possible to position the shaped wire precisely on the longitudinal rods of a filter element. The placement and the shape of the shaped wire are such as to form filter elements for filtration from inside to outside. Filter elements of this type improve the quality of the filtered product.

The bulging portion bulges, as discussed hereinbefore and inter alia may be inferred from appended Figures 8 to 11 inclusive, below the plane (X) formed by the first ends. The shaped wire (1) presented in Figures 8, 10 and 11 is set back from the two first ends, in the direction of the centre line (Y) of the shaped wire (2), the aforementioned plane forming substantially a right angle with this centre line (Y). In that way, two flat sides (14) are, as it were, formed. The presence of these flat sides (14) counteracts the wedge effect during cleaning (reflushing in the direction indicated by arrow A). Furthermore, these flat sides offer the advantage that the filtered-out material cannot become stuck in a wedge during filtering.
Furthermore, the centre line (Y) of the shaped wires (2) shown in Figures 8, 10 and 11 is also an axis of symmetry of the aforementioned shaped wire (2). However, this need not always be the case. Thus, the centre line (Y) of the shaped wire (2) shown in Figure 9 is not an axis of symmetry. This shaped wire (2) is also set back just at one first end so that this shaped wire (2) comprises just one flat side (14).
The bulging portion has preferably, as shown in Figure 8, a rounded-off U-shaped cross section. However, as may be seen from Figures 9 to 11 inclusive, alternative embodiments of the shaped wire, having a different cross section (rectangular, triangular, etc.) of the bulging portion or the entire shaped wire, are also possible.

Use of the shaped wire (2) for producing filter elements according to the invention will reduce the tolerance with respect to the gap opening to +/- 10 microns. This allows the production of filter elements (1) having gap openings of up to 10 microns. These precise tolerances with respect to the gap opening will also allow filtration to be carried out with greater precision. In addition, as a result of the smaller tolerances with respect to the gap opening, it is possible, for larger gap openings (for example filters having gap openings of 0.2 mm), to filter with greater precision with respect to solid constituents.

As a result of the fact that it is possible to produce filter elements (1) having a gap opening of up to 10 microns, it is now possible to replace specific paper and cloth filters with filters comprising a shaped wire according to this invention. This has the advantage that these filters can be cleaned when they are filled up or clogged up. That is to say, paper and cloth filters cannot be cleaned and have to be destroyed, and that costs money. The filter elements provided with shaped wire according to the invention can even be employed for air, dust and gas filtration.

The reduction of the gap opening and more precise tolerances in production may clearly be seen from the following example. In this example, in each case 200 profile widths and 200 gap openings will be measured over an arbitrarily selected distance from the filter element with the aid of a scanner (type QVE200-PRO Quick Vision from Mitotoyo - measuring precision: 1/10,000 mm). The scanner runs over one profile at a time and one gap opening at a time and registers in each case the measured value.

The test was carried out on a production run of 100 filter elements provided with shaped wire according to the prior art (isosceles cross section) having a desired gap opening of 50 microns and a tolerance of at most +/-50 microns. In order to obtain the predefined level of quality, the measured values may thus not rise above 100 microns (50 microns + a tolerance of 50 microns) and not be less than 1 micron.

On checking 200 gap openings per filter tube (one production run equal to 100 %), the following result is obtained:
200 measurements of the 200 between 1 micron and 100 microns;
140 measurements of the 200 between 30 and 70 microns;
60 measurements of the 200 between 40 and 60 microns.

From the foregoing results, it may thus be concluded that the shaped wire according to the prior art does not allow the production of any filter elements having a uniform gap opening of less than 50 microns.

In a filter element provided with shaped wire according to the invention and having a predefined gap opening of 10 microns, on checking 200 gap openings per filter tube (one production run equal to 100 %), the following results are obtained:
200 measurements of the 200 between 1 micron and 40 microns;
180 measurements of the 200 between 5 and 30 microns;
160 measurements of the 200 between 5 and 20 microns.

As may be seen from the foregoing results, no single gap opening of the filter element is above the maximum limit of 40 microns (10 microns + 30 microns (tolerance)).

In filter elements (1) according to the invention, the average gap opening is smaller, and the tolerance will be more precise than that which has hitherto been standard. In other words, from now on, instead of +/- 50 microns, tolerance of +/-10 microns may now be predefined as being standard.

## Claims

1. A filter element (1) comprising a number of rods (7) which run in the longitudinal direction and to which a shaped wire (2) made of metal is welded and wherein between one or more shaped wires (2) lying next to one another filtering openings (8) are provided, wherein the aforementioned shaped wire (2) comprises two side flanks (3,4) which are joined together at a first end via a weld foot and are joined together at a second end via a head part (5) positioned opposite the weld foot, the distance between the aforementioned side flanks becoming greater in the direction of the weld foot, and in that the weld foot comprises at least one bulging portion (6) which bulges below the plane (X) formed by the aforementioned first ends, and in that the aforementioned plane (X) forms substantially a right angle with the centre line (Y) of the shaped wire (2) such that the shaped wire is set back from at least one first end in the direction of the centre line (Y) of the shaped wire (2), so that at least one flat side (14) is formed, **characterized in that** the filtering openings (8) formed have a gap opening of between 1 and 50 microns.

2. Filter element (1) according to claim 1, **characterized in that** the bulging portion (6) has a width which is less than the distance between the aforementioned first ends.

3. Filter element (1) according to claim 1 or 2, **characterized in that** the centre line (Y) of the shaped wire (2) is an axis of symmetry of the aforementioned shaped wire (2).

4. Filter element (1) according to one of the preceding claims, **characterized in that** the bulging portion (6) has a rounded-off U-shaped cross section.

5. Filter element (1) according to one of claims 1 to 3 inclusive, **characterized in that** the bulging portion (6) has a rectangular cross section.

6. Filter element (1) according to one of the preceding claims, **characterized in that** the aforementioned filter element (1) is a flat filter.

7. Filter element (1) according to one of the claims 1 to 6, **characterized in that** the aforementioned filter element (1) is a round filter.

## Patentansprüche

1. Filterelement (1), aufweisend eine Anzahl von Stangen (7), welche in der longitudinalen Richtung verlaufen und an welche ein aus Metall hergestellter, geformter Draht (2) angeschweißt ist, und wobei zwischen einem oder mehreren geformten Drähten (2) nebeneinander liegende Filteröffnungen (8) vorgesehen sind, wobei der vorgenannte geformte Draht (2) zwei Seitenflanken (3,4) aufweist, welche an einem ersten Ende über einen Schweißfuß miteinander verbunden sind und an einem zweiten Ende über ein dem Schweißfuß gegenüber angeordnetes Kopfteil (5) miteinander verbunden sind, wobei der Abstand zwischen den vorgenannten Seitenflanken in die Richtung des Schweißfußes größer wird, und dass der Schweißfuß mindestens einen sich wölbenden Abschnitt (6) aufweist, welcher sich unterhalb der Ebene (X), welche durch die vorgenannten ersten Enden gebildet wird, wölbt, und dass die vorgenannte Ebene (X) im Wesentlichen einen rechten Winkel mit der Mittellinie (Y) des geformten Drahtes (2) bildet, so dass der geformte Draht von mindestens einem ersten Ende in der Richtung der Mittellinie (Y) des geformten Drahtes (2) zurückgesetzt wird, so dass mindestens eine ebene Seite (14) gebildet wird, **dadurch gekennzeichnet, dass** die gebildeten Filteröffnungen (8) eine Spaltöffnung von zwischen 1 und 50 Mikrometer aufweisen.

2. Filterelement (1) nach Anspruch 1, **dadurch gekennzeichnet, dass** der sich wölbende Abschnitt (6) eine Breite aufweist, welche kleiner als der Abstand zwischen den vorgenannten ersten Enden ist.

3. Filterelement (1) nach Anspruch 1 oder 2, **dadurch gekennzeichnet, dass** die Mittellinie (Y) des geformten Drahtes (2) eine Symmetrieachse des vorgenannten geformten Drahtes (2) ist.

4. Filterelement (1) nach einem der vorhergehenden Ansprüche, **dadurch gekennzeichnet, dass** der sich wölbende Abschnitt (6) einen abgerundeten, U-förmigen Querschnitt aufweist.

5. Filterelement (1) nach einem der Ansprüche 1 bis 3 einschließlich, **dadurch gekennzeichnet, dass** der sich wölbende Abschnitt (6) einen rechteckigen Querschnitt aufweist.

6. Filterelement (1) nach einem der vorhergehenden Ansprüche, **dadurch gekennzeichnet, dass** das vorgenannte Filterelement (1) ein flacher Filter ist.

7. Filterelement (1) nach einem der Ansprüche 1 bis 6, **dadurch gekennzeichnet, dass** das vorgenannte Filterelement (1) ein runder Filter ist.

## Revendications

1. Elément de filtre (1) comprenant un certain nombre de tiges (7) qui s'étendent dans la direction longitudinale et auxquelles est soudé un fil façonné (2) fabriqué en métal et entre un ou plusieurs fils façonnés (2) situés les uns à côté des autres des ouvertures de filtration (8) étant prévues, ledit fil façonné (2) comprenant deux flancs latéraux (3, 4) qui sont joints l'un à l'autre au niveau d'une première extrémité par le biais d'une patte de soudage et sont joints l'un à l'autre au niveau d'une deuxième extrémité par le biais d'une partie de tête (5) positionnée à l'opposé de la patte de soudage, la distance entre lesdits flancs latéraux augmentant dans la direction de la patte de soudage, et la patte de soudage comprenant au moins une portion en renflement (6) qui dépasse en dessous du plan (X) formé par lesdites premières extrémités, et ledit plan (X) formant sensiblement un angle droit avec l'axe central (Y) du fil façonné (2) de telle sorte que le fil façonné soit en retrait par rapport à au moins une première extrémité dans la direction de l'axe central (Y) du fil façonné (2), de telle sorte qu'au moins un côté plat (14) soit formé, **caractérisé en ce que** les ouvertures de filtration (8) formées présentent une ouverture d'espace comprise entre 1 et 50 microns.

2. Élément de filtre (1) selon la revendication 1, **caractérisé en ce que** la portion en renflement (6) présente une largeur inférieure à la distance entre lesdites premières extrémités.

3. Élément de filtre (1) selon la revendication 1 ou 2, **caractérisé en ce que** l'axe central (Y) du fil façonné (2) est un axe de symétrie dudit fil façonné (2).

4. Élément de filtre (1) selon l'une quelconque des revendications précédentes, **caractérisé en ce que** la portion en renflement (6) présente une section transversale en forme de U arrondie.

5. Élément de filtre (1) selon l'une quelconque des revendications 1 à 3 comprise, **caractérisé en ce que** la portion en renflement (6) présente une section transversale rectangulaire.

6. Élément de filtre (1) selon l'une quelconque des revendications précédentes, **caractérisé en ce que** ledit élément de filtre (1) est un filtre plat.

7. Élément de filtre (1) selon l'une quelconque des revendications 1 à 6, **caractérisé en ce que** ledit élément de filtre (1) est un filtre rond.
